# EUROPÄISCHE PATENTSCHRIFT

(11) **EP 1 259 738 B1**
(45) Veröffentlichungstag und Bekanntmachung des Hinweises auf die Patenterteilung: **24.03.2004**
(21) Anmeldenummer: 00904849.7
(22) Anmeldetag: 28.01.2000
(51) Int. Cl.: F16B 7/18

(54) **PROFILVERBINDUNGSEINRICHTUNG**
PROFILE CONNECTING DEVICE
DISPOSITIF DE CONNEXION DE PROFILES

(43) Veröffentlichungstag der Anmeldung: 27.11.2002
(73) Patentinhaber: FMS Förder- und Montage-Systeme Schmalzhofer GmbH, 75031 Eppingen-Mühlbach (DE)
(72) Erfinder: SCHMALZHOFER, Rainer, D-75031 Eppingen (DE); SCHUHMACHER, Wilfried, D-74363 Güglingen (DE)
(74) Vertreter: Clemens, Gerhard, Dr.-Ing.
(86) Internationale Anmeldenummer: PCT/DE2000/000245
(87) Internationale Veröffentlichungsnummer: WO 2001/055604

(56) Entgegenhaltungen:
- DE-A- 4 030 978
- DE-A- 4 142 273
- DE-U- 9 111 163
- DE-U- 29 814 153

## Beschreibung

Die vorliegende Erfindung betrifft eine Profilverbindungseinrichtung zum Verbinden zweier Profilstäbe, insbesondere aus Leichtmetall, von denen ein erster Profilstab mit einer Stirnseite an einer Längsseite eines zweiten Profilstabes anliegt, wobei zumindest die der Stirnseite des ersten Profilstabes zugewandte Außenlängsseite des zweiten Profilstabes und zumindest eine, insbesondere zwei gegenüberliegende Außenlängsseite/n des ersten Profilstabes eine hinterschnittene Nut aufweist mit einer Klemmeinheit, die zumindest bereichsweise eine Außenkontur aufweist, die in der Nut des ersten Profilstabes durch Aufweitung verklemmbar ist, einer in eine durchgehende Ausnehmung der Klemmeinheit einführbaren Schraubeneinheit und einer in die Nut des zweiten Profilstabes hintergreifend einbringbaren Gewindeeinheit, wobei durch das Eindrehen der in die Klemmeinheit eingeführten Schraubeneinheit in die Gewindeeinheit die Klemmeinheit gespreizt wird und dadurch in der Nut des ersten Profilstabes verklemmt wird und in Verbindung mit der Gewindeeinheit über die Schraubeneinheit eine teilweise klemmende und teilweise formschlüssige Verbindung der beiden Profilstäbe geschaffen wird, wobei die Klemmeinheit eine Bodenplatte mit einer Breite aufweist, die der Nutbreite des ersten Profilstabes und des zweiten Profilstabes entspricht, und an die Bodenplatte zumindest zwei durch die Gewindeeinheit aufspreizbare Klemmelemente angeordnet sind, so dass die Klemmeinheit in nicht gespreiztem Zustand zumindest in die Nut des ersten Profilstabes eingeschoben werden kann.

Derartige Profilstäbe, insbesondere als Aluminiumprofilstäbe ausgebildet, mit außenliegenden Nuten werden im industriellen Bereich häufig zu Tragkonstruktionen für Vorrichtungen zusammengefügt.

### STAND DER TECHNIK

Bei der Montage von Aluminiumprofilen ist eine Anzahl von Verbindungen bekannt, bei der mindestens ein Profil, teilweise beide Profile bearbeitet, d.h. mit Bohrungen oder Fräsungen versehen werden müssen. Neben den Kosten für die Bearbeitung sind die vorhandenen Profilelemente oft schwierig und daher teuer herzustellen.

In der Regel wird durch die Profilbearbeitung zudem die Festigkeit der Profile gerade im Anschlussbereich geschwächt. Bei einigen der bekannten Verbindungen ist das Anzugs- bzw. Verbindungsmoment ungleichförmig und daher nicht optimal. Die bei manchen Profilverbindungseinrichtungen eingesetzten selbstschneidenden Schrauben verlagern das Bearbeitungsproblem auf die Montage.

Aus der EP-B1-0 460 360 ist eine Profilverbindungseinrichtung der eingangs genannten Art bekannt. Dabei wird ein Flansch mit zumindest einem Nutstein verbunden, der über eine Schraube in einer Innenkammer des ersten Profilstabes angeschraubt ist. In Achsenrichtung der Nute des ersten Profilstabes wird nunmehr über ein Schraubelement der Flansch mit in der Nut des zweiten Profilstabes angeordneten Nutensteinen verschraubt.

Auch die EP-0 233 525 zeigt eine Profilverbindungseinrichtung, bei der ein Flansch eingesetzt wird, der über eine Schraube in der Innenkammer des ersten Profils verschraubt ist, wobei in der Innenkammer ein Arretierteil zuvor eingeführt und dort form- und/oder kraftschlüssig festgelegt worden ist.

In dem DE-U-298 14 153 als nächstliegendem Stand der Technik ist eine Profilverbindungseinrichtung der eingangs genannten Art beschrieben. Dort wird eine aufspreizbare Klemmeinheit eingesetzt, deren Außenumfangskontur zumindest bereichsweise der Innenkontur des Hinterschneidungsbereiches der Nut des ersten Profilstabes entspricht. Unterseitig ist an diese Klemmeinheit eine Zentriereinheit angeschlossen. Die Klemmeinheit besitzt eine Bodenplatte mit einer Breite, die der Nutbreite des ersten und zweiten Profilstabes entspricht, und an die Bodenplatte sind zumindest zwei durch die Gewindeeinheit aufspreizbare Klemmelemente angeformt, so dass die Klemmeinheit in nicht gespreiztem Zustand zumindest in die Nut des ersten Profilstabes und/oder bereichsweise in die Nut des zweiten Profilstabes eingeschoben werden kann.

### DARSTELLUNG DER ERFINDUNG

Ausgehend von dem genannten Stand der Technik liegt der vorliegenden Erfindung das technische Problem bzw. die Aufgabe zugrunde, die im Stand der Technik angegebenen Nachteile zu vermeiden und einen Profilverbinder anzugeben, der eine stabile Verbindung der Profile mit gleichförmigem Anzug- bzw. Haltemoment ohne jegliche Profilbearbeitung gewährleistet. Zudem soll eine schnelle Montage der Verbindung ermöglicht werden, die direkt im Anschlussbereich eingebracht werden kann, ohne dass eine Vorbearbeitung der Profile erforderlich ist.

Ein weiteres technisches Problem liegt darin, eine Profilverbindungseinrichtung anzugeben, die auch nachträglich in eine bestehende Konstruktion eingefügt werden kann, ohne dass eine Demontage der bestehenden Konstruktion vorgenommen werden muss.

Die erfindungsgemäße Profilverbindungseinrichtung ist durch die Merkmale des unabhängigen Anspruchs 1 gegeben. Vorteilhafte Ausgestaltungen und Weiterbildungen sind Gegenstand der abhängigen Ansprüche.

Die erfindungsgemäße Profilverbindungseinrichtung der eingangs genannten Art ist demgemäß dadurch gekennzeichnet, dass die Klemmelemente außenbündig an die Bodenplatte so angeformt sind, dass sie nicht über die Breite der Bodenplatte hinausragen, beziehungsweise die Klemmeinheit in ihren Außenmaßen das Maß der Nut des ersten Profilstabes nicht überschreitet. Dadurch, dass die Klemmeinheit dieselbe Breite wie die Nut des Profilstabes aufweist, wird beim Eindrehen der Schraubeneinheit in die Gewindeeinheit zusätzlich zur Spreizung eine automatische Zentrierung der Profile bewirkt, sobald die Verschraubung mit der Gewindeeinheit, die bevorzugt eine Hammermutter sein kann, greift.

Eine besonders vorteilhafte Weiterbildung der erfindungsgemäßen Profilverbindungseinrichtung zeichnet sich dadurch aus, dass die Schraubeneinheit als Keilschraube mit bereichsweise geneigten Flanken ausgebildet ist und die Klemmeinheit entsprechend geneigte Gegenflankenbereiche aufweist, wobei eine besonders vorteilhafte Ausgestaltung sich dadurch auszeichnet, dass die Innenkontur der Gegenflankenbereiche der Klemmeinheit mit einer selbsthemmenden Steigung ausgebildet sind, so dass eine dauerhaft zuverlässige Verbindung gewährleistet werden kann.

Eine hinsichtlich der Herstellung und einfacher Handhabung besonders bevorzugte Ausgestaltung zeichnet sich dadurch aus, dass die Klemmelemente jeweils einen Absatz aufweisen, der in eingesetztem und aufgespreiztem Zustand der Klemmeinheit die Nut des ersten Profilstabes zumindest bereichsweise hintergreift, wobei in einer Weiterbildung die Absatztiefe von der Bodenplatte zum gegenüberliegenden Stirnendbereich der Klemmelemente zunimmt, das heißt die klemmende Pressung beim Aufspreizen der Klemmeinheit im Bereich der an die Bodenplatte anschließenden Bereiche sehr hoch eingestellt werden kann.

Bevorzugt weisen die Bereiche, die im eingesetzten und gespreizten Zustand innerhalb der Öffnungsbreite an der Nutwandung anliegen, eine Riffelung auf, wodurch die Klemmkraft zuverlässig erhöht werden kann.

Als Material für die Klemmeinheit und/oder Zentriereinheit kommt bevorzugt Aluminium-/Zink-Druckguß oder Stahl in Frage.

Die Klemmeinheit und/oder Zentriereinheit kann auch als Feinschmiedeeinheit ausgebildet sein.

Als Gewindeeinheit wird bevorzugt eine Hammermutter oder ein Nutenstein, insbesondere federbeaufschlagter Nutenstein, eingesetzt.

Eine besonders hinsichtlich der übertragenen Anschluß-Kräfte und -Momente vorteilhafte Ausgestaltung zeichnet sich dadurch aus, daß in den beiden sich gegenüberliegenden Nuten der ersten Profileinheit jeweils eine Klemmeinheit mit Zentrier- und Schraubeneinheit angeordnet sind, wobei die Schraubeneinheit in jeweils eine Gewindeeinheit oder alternativ in eine gemeinsame Gewindeeinheit, die zwei Bohrungen entsprechend dem Abstand der beiden Nute aufweist, eingeschraubt werden.

Eine einfache und schnelle Montage wird in einer vorteilhaften Ausgestaltung noch dadurch unterstützt, indem die Schraubeneinheit oberseitig eine Kontur zum Ansetzen eines Werkzeugs besitzt, welche Kontur bevorzugt als Innenmehrkantkontur ausgebildet ist.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im folgenden anhand des in der Zeichnung dargestellten Beispiels näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: schematische Perspektivdarstellung einer Klemmeinheit mit Schraubeneinheit und Gewindeeinheit zur Verbindung eines ersten und eines zweiten Profilstabes (Ausschnitt) in Explosionsdarstellung und
- Fig. 2a),b): schematische Schnittdarstellung durch den ersten Profilstab mit Draufsicht auf die Klemmeinheit gemäß Fig. 6 in die Nut des zweiten Profilstabes in eingesetztem Zustand a) und in gespreiztem Verbindungszustand b).

### WEGE ZUM AUSFÜHREN DER ERFINDUNG

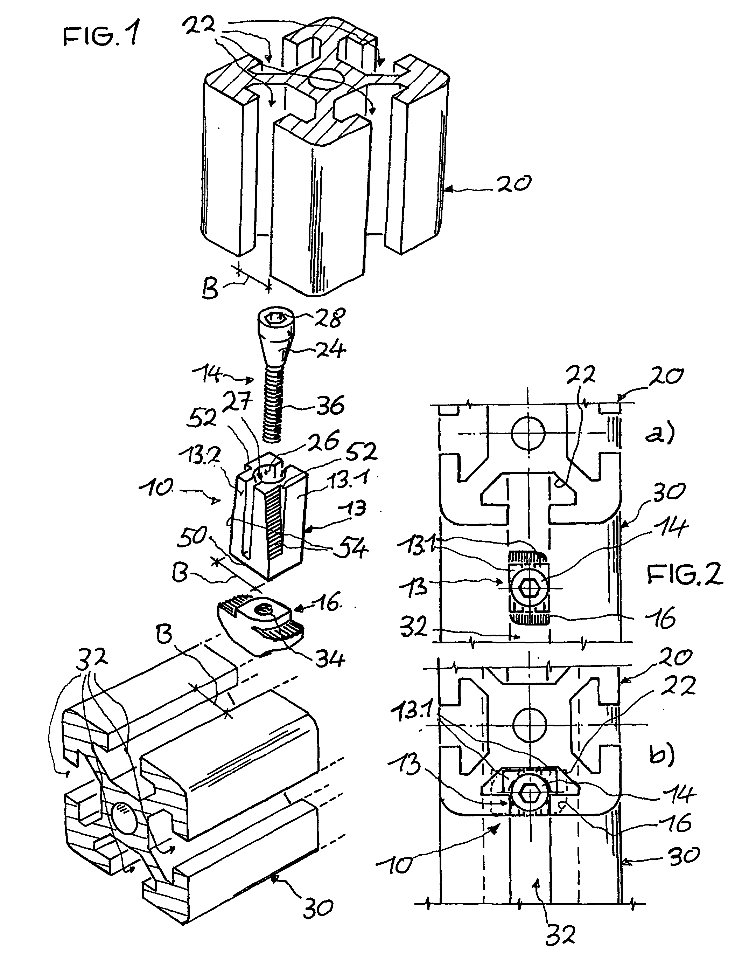

In Fig. 1 sind zwei Profilstäbe 20, 30 dargestellt, die im rechten Winkel zueinander angeschlossen sind. Dabei ist ein erster, von oben kommender Profilstab 20 stirnseitig an eine Außenfläche eines in Fig. 1 horizontal angeordneten Profilstabes 30 angeschlossen. Beide Profilstäbe 20, 30 sind als Aluminium-Profilstäbe ausgebildet, die eine quadratische Außenumfangskontur besitzen, wobei auf jeder Außenseite eine in Längsrichtung durchgehende Nut 22 bzw. 32 vorhanden ist.

Der Anschluß erfolgt über eine Profilverbindungseinrichtung 10, die wie folgt aufgebaut ist.

Zunächst besitzt jede Profilverbindungseinrichtung 10 eine Klemmeinheit 13, die zwei Klemmelemente 13.1, 13.2 aufweist.

In ihrem oberen Bereich besitzen die Klemmelemente 13.1 einen geneigt nach innen vorhandenen Gegenflankenbereich 26. Zwischen beide Klemmelemente 13.1, 13.2 ist bei in die Nut 22 eingesetzten Elementen 13.1, 13.2 eine Schraubeneinheit 14 mit Außengewinde 36 einführbar, die als Keilschraube ausgebildet ist und ebenfalls entsprechend den Gegenflankenbereichen 26 der Klemmelemente 13.1, 13.2 geneigte Flanken 24 besitzt, die im eingesetzten Zustand mit den Gegenflanken 26 zur Anlage kommen.

Der Kopf der Schraubeneinheit 14 besitzt oberseitig eine Sechskantinnenkontur 28 zum Ansetzen eines Werkzeuges.

Weiterhin besitzt die Profilverbindungseinrichtung 10 eine Gewindeeinheit 16, die im Ausführungsbeispiel als bekannte Hammerkopfmutter mit Innengewinde 34 ausgebildet ist und in die Nut 32 des zweiten Profilstabes 30 und die Nut 32 hintergreifend einsetzbar ist.

In einem nicht dargestellten Ausführungsbeispiel wird ein in der Nut 32 durchgehendes Gewindeelement eingesetzt, das entsprechend dem Abstand der beiden Schraubeneinheiten beziehungsweise der Nute 22 des ersten Profilstabes Bohrungen mit Gewinde mit demselben Abstand aufweist.

Die Klemmeinheit 13 weist unterseitig eine Bodenplatte 50 der Breite B, die der Nutbreite B des ersten Profilstabes 20 und des zweiten Profilstabes 30 entspricht. Oberseitig sind an die Bodenplatte 50 die zwei getrennten Klemmelemente 13.1 angeformt, die nicht über die Breite B hinausragen. Diese beiden Klemmeinheiten 13.1 bilden in ihrem Inneren eine durchgehende Ausnehmung 27 mit der entsprechenden Gegenflanke 26 für die Flanke 24 der Schraubeinheit 14.

Die Klemmelemente 13.1, 13.2 besitzen außenseitig einen Absatz 52, der von der Bodenplatte 50 her zum gegenüberliegenden Stirnendrand in seiner Tiefe zunimmt. Dadurch entsteht eine geneigte Fläche, die gemäß dem dargestellten Ausführungsbeispiel Querrippen beziehungsweise eine Riffelung 54 aufweist.

Als Gewindeeinheit 16 wird eine als solche bekannte Hammermutter 16 eingesetzt, die dann problemlos in die Nut 32 des zweiten Profilstabes 30 eingesetzt werden kann. Durch Drehung der Schraubeneinheit 14 dreht sich zunächst die Hammermutter 16 mit und verkantet anschließend in der Nut 32 des zweiten Profilstabes 30.

Die Schraubeinheit 14, die Klemmeinheit 13 und die Gewindeeinheit 16 können eine vormontierte Montageeinheit bilden, indem die Schraubeinheit 14 leicht in das Innengewinde 34 der Gewindeeinheit 16 eingedreht ist, so daß die Klemmelemente 13.1 der Klemmeinheit 13 keine Aufspreizung erfahren. In diesem vormontierten Zustand kann die Verbindungseinrichtung 10.1 unter entsprechender Stellung der Hammermutter 16 in die Nut 32 eingeführt werden. Diese Position ist in Figur 2a) dargestellt. Da die Bodenplatte 50 in diesem Zustand bereichsweise in die Nut 32 des zweiten Profilstabes 30 eingreift, ist bereits in diesem Vormontagezustand eine gewisse Zentrierung gegeben. Anschließend wird die Verbindungseinrichtung 10 entlang der Nut 32 in die Nut 22 des ersten Profilstabes geschoben. Dies ist deshalb möglich, da die Klemmeinheit 13 in ihren Außenmaßen das Maß der Nut nicht überschreitet. Wird nun die Schraubeinheit 14 gedreht, dreht sich zunächst die Hammermutter 16 in der Nut 32, bis sie schließlich verkantet. Durch weiteres Drehen der Schraubeinheit 14 drückt deren Flanke 24 auf die entsprechende Gegenfläche 26 der Klemmelemente 13.1, wodurch es zu einer seitlichen Spreizung dieser Klemmelemente 13.1 kommt. Im Endzustand der Aufspreizung der Klemmelemente 13.1 ist es so, daß die beiden Anschlagflächen 52 die Innenwandung der Nut 22 zumindest bereichsweise hintergreifen, so daß in diesem Zustand ein Herausziehen der Verbindungseinrichtung 10.1 aus der Nut 22 infolge des Formschlusses nicht mehr möglich ist. Gleichzeitig werden die Klemmelemente 13.1 der Klemmeinheit 13 auseinandergedrückt, so daß die jeweils vor dem Absatz 52 liegenden Flächen der Klemmelemente 13.1 mit Riffelung 54 gegen die Wandung der Öffnung der Nut 22 klemmend gepreßt werden.

Mit der dargestellten Profilverbindungseinrichtung 10 steht eine Montagehilfe zum zuverlässigen Verbinden zweier senkrecht aufeinanderstehender Profilstäbe 20, 30 mit Nuten 22, 32 zur Verfügung, bei der es nicht erforderlich ist, Montageteile von den freien Stirnseiten der Nut 22 beziehungsweise 32 her einzufädeln oder eventuelle Bohrungen vorzunehmen. Der Montagevorgang gestaltet sich äußerst einfach und es wird eine dauerhaft zuverlässige Verbindung gewährleistet.

## Patentansprüche

1. Profilverbindungseinrichtung (10) zum Verbinden zweier Profilstäbe (20; 30), insbesondere aus Leichtmetall, von denen ein erster Profilstab (20) mit einer Stirnseite an einer Längsseite eines zweiten Profilstabes (30) anliegt, wobei zumindest die der Stirnseite des ersten Profilstabes (20) zugewandte Außenlängsseite des zweiten Profilstabes (30) und zumindest eine, insbesondere zwei gegenüberliegende Außenlängsseite/n des ersten Profilstabes (20) eine hinterschnittene Nut (32; 22) aufweist, mit
- einer Klemmeinheit (13), die zumindest bereichsweise eine Außenkontur aufweist, die in der Nut (22) des ersten Profilstabes (20) durch Aufweitung verklemmbar ist,
- einer in eine durchgehende Ausnehmung (27) der Klemmeinheit (13) einführbaren Schraubeneinheit (14) und
- einer in die Nut (32) des zweiten Profilstabes (30) hintergreifend einbringbaren Gewindeeinheit (16),
- wobei durch das Eindrehen der in die Klemmeinheit (13) eingeführten Schraubeneinheit (14) in die Gewindeeinheit (16) die Klemmeinheit (13) gespreizt wird und dadurch in der Nut (22) des ersten Profilstabes (20) verklemmt wird und in Verbindung mit der Gewindeeinheit (16) über die Schraubeneinheit (14) eine teilweise klemmende und teilweise formschlüssige Verbindung der beiden Profilstäbe (20; 30) geschaffen wird,
- wobei die Klemmeinheit (13) eine Bodenplatte (50) mit einer Breite (B) aufweist, die der Nutbreite (B) des ersten Profilstabes (20) und des zweiten Profilstabes (30) entspricht, und an der Bodenplatte (50) zumindest zwei durch die Gewindeeinheit (14) auf spreizbare Klemmelemente (13.1) angeordnet sind, so dass die Klemmeinheit (13) in nicht gespreiztem Zustand zumindest in die Nut (22) des ersten Profilstabes (20) eingeschoben werden kann,
**dadurch gekennzeichnet, dass**
- die Klemmelemente (13.1) außenbündig an die Bodenplatte (50) so angeformt sind, dass sie nicht über die Breite (B) der Bodenplatte (50) hinausragen, beziehungsweise die Klemmeinheit (13) in ihren Außenmaßen das Maß der Nut (22) des ersten Profilstabes (20) nicht überschreitet.

2. Profilverbindungseinrichtung nach Anspruch 1,
**dadurch gekennzeichnet, dass**
- die Schraubeneinheit (14) als Keilschraube mit bereichsweise geneigten Flanken (24) ausgebildet ist und die Klemmeinheit (13) entsprechend geneigte Gegenflankenbereiche (26) aufweist.

3. Profilverbindungseinrichtung nach Anspruch 2,
**dadurch gekennzeichnet, dass**
- die Innenkontur der Gegenflankenbereiche (26) der Klemmeinheit (13) mit einer selbsthemmenden Steigung ausgebildet ist.

4. Profilverbindungseinrichtung nach einem der Ansprüche 1 bis 3,
**dadurch gekennzeichnet, dass**
die Klemmelemente (13.1) jeweils einen Absatz (52) aufweisen, der in eingesetztem und aufgespreiztem Zustand der Klemmeinheit die Nut (22) des ersten Profilstabes (20) zumindest bereichsweise hintergreift.

5. Profilverbindungseinrichtung nach Anspruch 4,
**dadurch gekennzeichnet, dass**
die Absatztiefe von der Bodenplatte (50) zum gegenüberliegenden Stirnendbereich der Klemmelemente (13.1) zunimmt.

6. Profilverbindungseinrichtung nach einem oder mehreren der Ansprüche 1 bis 5,
**dadurch gekennzeichnet, dass**
die in dem Bereich der Öffnung der Nut im eingesetzten Zustand angeordneten Teilbereiche der Klemmeinheiten (13.1) eine Riffelung (54) aufweisen.

7. Profilverbindungseinrichtung nach einem oder mehreren der vorstehenden Ansprüche,
**dadurch gekennzeichnet, dass**
- die Klemmeinheit und/oder Zentriereinheit aus Aluminium-/Zink-Druckguß oder aus Stahl besteht.

8. Profilverbindungseinrichtung nach einem oder mehreren der Ansprüche 1 bis 6,
**dadurch gekennzeichnet, dass**
- die Klemmeinheit und/oder Zentriereinheit als Feinschmiedeeinheit ausgebildet ist.

9. Profilverbindungseinrichtung nach einem oder mehreren der vorstehenden Ansprüche,
**dadurch gekennzeichnet, dass**
- die Gewindeeinheit (16) als Hammermutter ausgebildet ist.

10. Profilverbindungseinrichtung nach einem oder mehreren der vorstehenden Ansprüche 1 bis 8,
**dadurch gekennzeichnet, dass**
- die Gewindeeinheit als Nutenstein, insbesondere federbeaufschlagter Nutenstein, ausgebildet ist.

11. Profilverbindungseinrichtung nach einem oder mehreren der vorstehenden Ansprüche,
**dadurch gekennzeichnet, dass**
- die Gewindeeinheit zwei beabstandet zueinander angeordnete Bohrungen aufweist, deren Abstand im wesentlichen dem Abstand zweier sich gegenüberliegender Nute des ersten Profilstabes entspricht.

12. Profilverbindungseinrichtung nach einem oder mehreren der vorstehenden Ansprüche,
**dadurch gekennzeichnet, dass**
- die Schraubeneinheit (14) oberseitig eine Kontur (28) zum Ansetzen eines Werkzeugs besitzt.

13. Profilverbindungseinrichtung nach Anspruch 12,
**dadurch gekennzeichnet, dass**
- die Kontur (28) als Innenmehrkantkontur ausgebildet ist.

## Claims

1. Profile-connecting device (10) for connecting two profile bars (20; 30), in particular made of light metal, of which a first profile bar (20) has an end side butting against a longitudinal side of a second profile bar (30), at least that outer longitudinal side of the second profile bar (30) which is directed toward the end side of the first profile bar (20) and at least one outer longitudinal side, in particular two mutually opposite outer longitudinal sides, of the first profile bar (20) having an undercut groove (32; 22), having
- a clamping unit (13), which, at least in certain regions, has an outer contour which can be clamped in the groove (22) of the first profile bar (20) by virtue of being widened,
- a screw unit (14) which can be introduced into a continuous cutout (27) of the clamping unit (13), and
- a threaded unit (16) which can be introduced with rear-engagement action into the groove (32) of the second profile bar (30),
- the clamping unit (13) being spread apart, and thus clamped in the groove (22) of the first profile bar (20), by virtue of the screw unit (14), which is introduced into the clamping unit (13), being screwed into the threaded unit (16), and a partly clamping and partly form-fitting connection between the two profile bars (20; 30) being produced, in conjunction with the threaded unit (16), via the screw unit (14),
- it being the case that the clamping unit (13) has a base plate (50) with a width (B) which corresponds to the groove width (B) of the first profile bar (20) and of the second profile bar (30), and at least two clamping elements (13.1), which can be spread apart by the threaded unit (14), are arranged or on the base plate (50), with the result that, in the non-spread-apart state, the clamping unit (13) can be pushed at least into the groove (22) of the first profile bar (20),
**characterized in that**
- the clamping elements (13.1) are integrally formed with the base plate (50), flush with the outside of the latter, such that they do not project beyond the width (B) of the base plate (50), and the outer dimensions of the clamping unit (13) do not exceed the dimensions of the groove (22) of the first profile bar (20).

2. Profile-connecting device according to Claim 1,
**characterized in that**
- the screw unit (14) is designed as a wedge screw with flanks (24) which are inclined in certain regions, and the clamping unit (13) has correspondingly inclined mating flank regions (26).

3. Profile-connecting device according to Claim 2,
**characterized in that**
- the inner contour of the mating flank regions (26) of the clamping unit (13) is formed with a self-locking slope.

4. Profile-connecting device according to one of Claims 1 to 3, **characterized in that**
the clamping elements (13.1) each have a shoulder (52) which, in the inserted and spread-apart state of the clamping unit, engages, at least in certain regions, behind the groove (22) of the first profile bar (20).

5. Profile-connecting device according to Claim 4,
**characterized in that**
the shoulder depth increases from the base plate (50) to the opposite end region of the clamping elements (13.1).

6. Profile-connecting device according to one or more of Claims 1 to 5, **characterized in that**
those sub-regions of the clamping units (13.1) which are arranged in the region of the opening of the groove in the inserted state contain knurling (54).

7. Profile-connecting device according to one or more of the preceding claims, **characterized in that**
- the clamping unit and/or centering unit comprise/comprises an aluminum/zinc pressure die casting or consist/consists of steel.

8. Profile-connecting device according to one or more of Claims 1 to 6, **characterized in that**
- the clamping unit and/or centering unit are/is in the form of a precision forging.

9. Profile-connecting device according to one or more of the preceding claims, **characterized in that**
- the threaded unit (16) is designed as a hammer nut.

10. Profile-connecting device according to one or more of the preceding Claims 1 to 8, **characterized in that**
- the threaded unit is designed as a sliding block, in particular a spring-activated sliding block.

11. Profile-connecting device according to one or more of the preceding claims, **characterized in that**
- the threaded unit has two spaced-apart bores, the spacing between which corresponds essentially to the spacing between two mutually opposite grooves of the first profile bar.

12. Profile-connecting device according to one or more of the preceding claims, **characterized in that**
- the screw unit (14), on the top side, has a contour (28) for the engagement of a tool.

13. Profile-connecting device according to Claim 12,
**characterized in that**
- the contour (28) is in the form of a polygonal socket contour.

## Revendications

1. Dispositif de connexion de profilés (10) pour la connexion de deux barres profilées (20 ; 30), en particulier en métal léger, dont une première barre profilée (20) adhère avec une face frontale contre une face longitudinale d'une seconde barre profilée (30), au moins le côté longitudinal externe de la seconde barre profilée (30) tourné vers la face frontale de la première barre profilée (20), et au moins un, en particulier deux côtés longitudinaux externes opposés de la première barre profilée (20) comportant une rainure (32 ; 22) contre-dépouillée, avec
- une unité de serrage (13) qui comprend au moins partiellement un contour externe qui peut être coincé par élargissement dans la rainure (22) de la première barre profilée (20),
- une unité à vis (14) pouvant être introduite dans un évidement (27) traversant de l'unité de serrage (13) et
- une unité filetée (16) pouvant être mise en place par engagement ou venue en prise arrière dans la rainure (32) de la seconde barre profilée (30),
- l'unité de serrage (13) étant écartée par le visage dans l'unité filetée (16) de l'unité à vis (14) introduite dans l'unité de serrage (13), et de ce fait coincée dans la rainure (22) de la première barre profilée (20) et en liaison avec l'unité filetée (16) via l'unité à vis (14), un assemblage partiellement bloquant et partiellement à engagement positif des deux barres profilées (20 ; 30) étant établi,
- l'unité de serrage (13) comprenant une plaque de base (50) avec une largeur (B) qui correspond à la largeur de rainure (B) de la première barre profilée (20) et de la seconde barre profilée (30), et au moins deux éléments de serrage (13.1) pouvant être écartés par l'unité filetée (14) étant prévus sur la plaque de base (50), de sorte que l'unité de serrage (13) peut être introduite à l'état non écarté au moins dans la rainure (22) de la première barre profilée (20),
**caractérisé en ce que**,
- les éléments de serrage (13.1) sont reliés extérieurement à fleur avec la plaque de base (50), de sorte qu'ils ne dépassent pas de la largeur (B) de la plaque de base (50), ou que l'unité de serrage (13) ne dépasse pas dans ses dimensions hors-tout la dimension de la rainure (22) de la première barre profilée (20).

2. Dispositif de connexion de profilés selon la revendication 1,
**caractérisé en ce que**
- l'unité à vis (14) est configurée comme une vis à coin avec des flancs (24) partiellement inclinés, et l'unité de serrage (13) comporte des zones de flancs conjugués (26) inclinés de manière correspondante.

3. Dispositif de connexion de profilés selon la revendication 2,
**caractérisé en ce que**
- le contour interne des zones de flancs conjugués (26) de l'unité de serrage (13) sont configurés avec une pente autobloquante.

4. Dispositif de connexion de profilés selon l'une des revendications 1 à 3, **caractérisé en ce que** les éléments de serrage (13.1) comportent chacun un décrochement (52) qui s'engage ou vient en prise par l'arrière au moins partiellement à l'état inséré et écarté de l'unité de serrage dans la rainure (22) de la première barre profilée (20).

5. Dispositif de connexion de profilés selon la revendication 4,
**caractérisé en ce que** la profondeur du décrochement augmente de la plaque de base (50) vers la zone terminale frontale opposée des éléments de serrage (13.1).

6. Dispositif de connexion de profilés selon une ou plusieurs des revendications 1 à 5,
**caractérisé en ce que**
les zones partielles, disposées dans la zone de l'ouverture de la rainure, à l'état inséré des unités de serrage (13.1), comportent une cannelure (54).

7. Dispositif de connexion de profilés selon une ou plusieurs des revendications précédentes,
**caractérisé en ce que**
- l'unité de serrage et/ou l'unité de centrage est constituée par une coulée sous pression en aluminium/zinc ou par de l'acier.

8. Dispositif de connexion de profilés selon une ou plusieurs des revendications 1 à 6,
**caractérisé en ce que**
- l'unité de serrage et/ou l'unité de centrage est configurée comme une unité de forgeage fin.

9. Dispositif de connexion de profilés selon une ou plusieurs des revendications précédentes,
**caractérisé en ce que**
- l'unité filetée (16) est configurée comme un écrou marteau.

10. Dispositif de connexion de profilés selon une ou plusieurs des revendications 1 à 8,
**caractérisé en ce que**
- l'unité filetée est configurée comme un coulisseau, en particulier un coulisseau chargé par ressort.

11. Dispositif de connexion de profilés selon une ou plusieurs des revendications précédentes,
**caractérisé en ce que**
- l'unité filetée comporte deux alésages disposés à distance l'un de l'autre, dont la distance correspond essentiellement à la distance de deux rainures situées en vis-à-vis de la première barre profilée.

12. Dispositif de connexion de profilés selon une ou plusieurs des revendications précédentes,
**caractérisé en ce que**
- l'unité à vis (14) possède à la partie supérieure un contour (28) prévu pour la pose d'un outil.

13. Dispositif de connexion de profilés selon la revendication 12,
**caractérisé en ce que**
- le contour (28) est configuré comme un contour polygonal interne.
